# EUROPEAN PATENT APPLICATION

(11) **EP 2 566 126 A1**
(43) Date of publication of application: **06.03.2013**
(21) Application number: 11179853.4
(22) Date of filing: 02.09.2011
(51) Int. Cl.: H04L 29/06, H04W 12/02, H04M 3/22

(54) **Secure storage of provisioning data on network for control of lawful intercept**

(71) Applicant: Koninklijke KPN N.V., 2516 CK The Hague (NL)
(72) Inventor: van den Berg, Jaap, 2642 AD Delft (NL)
(74) Representative: Wuyts, Koenraad Maria

(57) **Abstract**

In order to configure network equipment for the process of Lawful Interception of communications, target hash-values are stored at the equipment. Each specific one of the target hash-values represents a specific target attribute identifying, e.g., a targeted calling party or a targeted called party in a targeted communication. During the setting up of any candidate communication on the network, a candidate hash-value is determined of the candidate attribute that identifies, e.g., the calling party or the called party of the candidate communication. The candidate communication is considered a targeted communication only if the candidate hash-value matches any of the stored target hash-values.

## Description

### FIELD OF THE INVENTION

The invention relates to a method of conditionally subjecting a communication, conducted via a communication network, to a pre-determined processing such as a Lawful Interception. The invention also relates to control software for configuring network equipment for executing the method.

### BACKGROUND

In the field of telecommunication, the expression "Lawful Interception" (LI) refers to intercepting communications on a public communication network on request from a law enforcement agency for the purpose of screening the communications. The screening is usually selectively applied to communications involving one or more specific targeted parties, e.g., individuals, in order to extract information from the intercepted communications. The information extracted may be used to, e.g., gather evidence about a criminal act, or to monitor the targeted parties for security reasons.

LI can also be used for monitoring emergency calls and a priority access service (PAS) on a communication network. Emergency calls are calls to emergency services such as to police, ambulance or fire department via, e.g., dialing "911" in the US or "112" in Europe. PAS provides to the authorities and governmental officials the necessary access in order to make priority calls despite the telecommunication networks being congested or otherwise lacking resources. With emergency calls as well as with requests for priority access, there is a need to ensure that these are only used for proper purposes and that abusers can be prosecuted.

To ensure systematic procedures for carrying out LI, industry groups and government agencies worldwide have been driving to standardize the technical processes supporting LI. The architecture that has emerged is now being used worldwide.

Part of the standardized architecture relates to the collection of information about target-related call data and/or about target-related call content. This information is extracted from the public telecommunication network in operational use. The call data relates to information about the targeted communications, such as the destination of a voice call (the called party's telephone number), the source of a voice call (the calling party's telephone number), the time of the day of the call, the duration of the call, the geographic location of the caller or of the called party, etc. The call data is referred to as "Intercept-Related Information" (IRI) in Europe, and as "Call Data" (CD) in the US. The call content, on the other hand, relates to the semantic information (the "payload") that is exchanged between the targeted individual and another party participating in the communication via the public telecommunication network. For more background on LI see, e.g., Aqsacom Document No. 100458, "LAWFUL INTERCEPTION FOR 3G AND 4G NETWORKS", White paper, March 2010; Utimaco LIMS, "Lawful Interception in the Digital Age: Vital Elements of an Effective Solution", White paper August 2009; and "Lawful Interception and Countermeasures: In the Era of Internet Telephony", MSc. Thesis, Romanidis Evripides, Royal Institute of Technology, Stockholm, Sweden, 2008-09-22.

LI is also used to intercept specific communications on a data network, such as the Internet. For example, emails to, or from, a particular network address can be subjected to LI. Likewise, download requests to a specific website and postings to a specific website can be subjected to LI.

The process of intercepting specific communications is carried out at the equipment of the public communication network. The law enforcement agency instructs the communication network operator, or the communication service provider, to intercept specific communications. Each respective one of the specific communications is specified in a respective LI request submitted by the law enforcement agency to the network operator or to the service provider. As an example, a particular LI request identifies a particular individual, who is a subscriber to the communication service and whose communications on the communication network need to be intercepted. The particular LI request also specifies what information is to be collected about this particular individual, and the time period over which the communications involving this particular individual need to be intercepted. As another example, a particular LI request identifies a particular communication device, e.g., a mobile telephone. The LI request then instructs the network operator or the service provider to intercept communications on the communication network that involve this particular communication device, and also what information is to be collected about this particular communication device, and the time period over which the communications involving this particular communication device need to be intercepted. As yet another example, a particular LI request identifies a particular address on the communication network, e.g., a telephone number, an email address or a URL, and instructs the network operator or the service provider to intercept communications that involve this particular address as a source or as a destination.

Accordingly, the information in the LI requests (referred to herein as: LI information or: provisioning data) identifies, for example, the particular parties or individuals, and/or the particular communication devices and/or the particular network addresses that are to be subjected to LI. This LI information is used by the network operator or the service provider to configure equipment on the communication network in order to only intercept the relevant communications and record those data as specified in the LI requests. The LI information is present at the equipment so as to be able to discriminate between the communications that are to be intercepted and other communications.

The LI information, which identifies the particular party, the particular communication device or the particular network address, is sensitive from the point of view of, e.g., privacy concerns and crime investigation. The LI information therefore needs to be secured against unauthorized access and leakage.

For security reasons, the law enforcement agency communicates the LI request in an encrypted format to the service provider or the network operator. Hashing is added to ensure authenticity of the encrypted LI request as received by the network operator or the service provider. See, e.g., SIPPING Working Group, "draft-sriram-sipping-poc-lip-00.txt", Aug. 17, 2005, "Lawful Intercept procedure via the Session Initiation Protocol (SIP) for the Open Mobile Alliance (OMA) Push to talk over Cellular (PoC)", section 10.

For security reasons, the network operator or the service provider communicates the information about the intercepted communications, collected during the LI, to the law enforcement agency in an encrypted format. Hashing may be added to ensure the authenticity of the encrypted requested information as received by the law enforcement agency. See, e.g., section 6.3.5. of WIMAX Forum Network Architecture, "Architecture, detailed Protocols and Procedures", WIMAX Lawful Intercept - NORTH AMERICAN REGION, WMF-T33-107-R015v01, 2009-11-21, and US patent application publication 20090279432.

### SUMMARY OF THE INVENTION

However, the LI information of the LI requests is programmed into the equipment of the communication network in order to configure the equipment for discriminating between the communications to be intercepted and other communications. Consider, for example, a particular LI request that identifies a particular telephone number and that instructs to intercept all telephone calls wherein the particular telephone number is involved as the telephone number of the called party. The particular telephone number needs then to be matched, in real-time, to the called telephone number of each telephone call being currently set up on the telephone network, in order to determine whether or not to intercept this current telephone call. For reasons of security, access to the LI information at the equipment of the communication network is granted only to specific members of the staff of the network operator or of the service provider, who have been authorized.

For added security, the particular telephone number in above example could be stored in encrypted format at the equipment on the communication network. However, the encryption key would then also be stored at the equipment so as to encrypt the called telephone number of each telephone call currently being set up in order to determine whether or not to start intercepting the current telephone call based on a match with the particular telephone number in encrypted format. Storing the encryption key together with the encrypted LI information at the equipment compromises the added security.

The inventor now proposes an alternative approach. In the invention, the law enforcement agency communicates the LI request containing a hash-value of an attribute of the targeted communication so as to be able to identify the targeted communication under control of the attribute as soon as the targeted communication is being set up. The attribute of the targeted communication comprises, e.g., an identity of the source requesting the setting-up of the targeted communication and/or the identity of a destination of the communication as requested by the source. The attribute of the targeted communication is referred to herein as: the target attribute. Examples of target attributes will be given further below. The hash-value in the LI request is referred to in this text as the target hash-value. Also, the law enforcement agency identifies in advance to the network operator or to the service provider the hash-function used to create the target hash-value. Accordingly, the target hash-value is the outcome produced by the pre-determined hash-function when operating on the target attribute. The network operator or the service provider configures the equipment of the communication network by means of storing the target hash-value and the algorithm of the hash-function.

When a communication is being set up on the network, the equipment extracts during the setting-up procedure an attribute of the communication being set-up. The extracted attribute enables to determine whether the communication being set up is a targeted communication. The communication being set up and being subjected to the process of extracting the attribute is referred to herein as: the candidate communication. The attribute extracted during the setting up of the candidate communication is referred to herein as: the candidate attribute. The candidate attribute is, for example, an identity of the source that requests the setting up of the candidate communication and/or the identity of the destination of the candidate communication as requested by the source.

The candidate attribute is represented by a string of data and is subjected to the hashing operation prescribed by the hash-function so as to produce the candidate hash-value. The candidate hash-value is matched against each of the target hash-values stored at the equipment. Only if there is a match between the candidate hash-value and any of the stored target hash-values, the candidate communication is considered a targeted communication, and the candidate communication is subjected to LI.

More specifically, the invention relates to a method of conditionally subjecting a candidate communication, conducted via a communication network, to a pre-determined processing such as LI. The method comprises determining a candidate attribute of the candidate communication during a procedure for setting up the candidate communication on the communication network. The candidate attribute is representative of a first identity of a source requesting the setting-up of the communication and/or of a second identity of a destination of the communication as requested by the source. The method further comprises producing a candidate hash-value. The producing of the candidate hash-value comprises using the candidate attribute as an input to a hash-function; determining if the candidate hash-value corresponds to a specific pre-determined target hash-value; and subjecting the communication to the pre-determined processing only if the candidate hash-value corresponds to the specific pre-determined target hash-value.

The target attributes are subjected in advance to a hash-function to produce the target hash-values. The same hash-function is used to operate on the current candidate attribute so as to produce the candidate hash-value. Information about the combination of a target hash-value and the hash-function cannot be used to identify the target attribute if a suitable hash-function has been used. A suitable hash-function is, for example, a cryptographic hash-function. A cryptographic hash-function has the properties of a so-called one-way function. A one-way function is a mathematical function that is easy to compute on any input, but hard to invert given the function's output on a random input. The qualifications "easy" and "hard" are used here in the sense of an indication of the computational complexity. Furthermore, a cryptographic hash-function is such that the chance of different inputs to the cryptographic hash-function producing the same hash-value can be ignored for all practical purposes. Also, for a cryptographic hash-function it is hard to find different inputs that produce the same hash-value. Cryptographic hash-functions are well known in the art, and need not be discussed here in further detail.

Accordingly, the target hash-values, stored on the network equipment and used to configure the network equipment so as to be able to identify targeted communications, cannot readily be used by an attacker to reverse engineer the actual target attributes.

In an embodiment of a method in the invention, the producing of the candidate hash-value comprises using a specific pre-determined key as a further input to the hash-function.

In the field of cryptography, the specific pre-determined key is being referred to as "a salt". Using a salt in a hash-function renders a lookup-table-assisted dictionary-attack against hash-values impractical, provided the salt is large enough. In a dictionary attack, an attacker creates an exhaustive list of hash-values from inputs that the attacker believes a likely to succeed. For example, assume that the attacker has gained unauthorized access to the target hash-values and the hash-function stored at the equipment of the communication network. Assume that the attacker has a reason to believe that the target hash-values represent telephone numbers as used on the communication network. Telephone numbers have a fixed number of digits and are of a certain pattern. For example, the first three digits of a particular telephone number in a particular country signify the area code (e.g., the code indicating a geographic region such as a city or a county) and the remaining digits indicate the local code. Accordingly, the attacker can use an educated guess to compile a list of inputs to the hash-function to see whether there are matches with the target hash-values. If, however, a salt is added as a further input to the hash-function, the possible length of the target attribute as well as the possible complexity of the target attribute increases from the point of view of the attacker.

The length of the specific pre-determined key, i.e., the number of digits or the number of bits of the specific key, is a compromise between multiple requirements. One of the requirements is that the network equipment have the data processing capability to determine in real-time whether or not to intercept a particular candidate communication being set up. The data processing should be fast enough to determine whether or not to intercept this particular communication before semantic information is actually being exchanged between the parties involved in this particular communication. That is, the candidate hash-value should have been computed and the comparison thereof to any of the locally stored pre-determined target hash-values should have been concluded, before the actual communication starts. The time to generate the candidate hash-value, using a given amount of compute power, sharply increases with an increase in the length of the key. Another one of the requirements is that the key be long enough to make it computationally hard for an attacker to determine the target attributes from the target hash-values within a time frame wherein the target attributes are relevant to the LI. The time to determine the target attributes by brute force, using a given amount of compute power, sharply increases with an increase in the length of the key. Accordingly, the length of the key should be long for security reasons whereas, for practical reasons, the length of the key should be short. The actual length of the key used is therefore chosen as a fair compromise, given the conditions imposed by real life.

A further embodiment of a method of the invention comprises determining the specific pre-determined key and the specific target value in response to detecting an occurrence of a pre-determined event.

A combination of the specific pre-determined key and the specific target hash-values is used to determine whether a candidate communication is a targeted communication on the basis of a matching candidate hash-value. The combination is determined in response to detecting a pre-determined event. Accordingly, a sequence of multiple such pre-determined events causes the combination of the specific pre-determined key as well as the pre-determined target hash-values to be replaced by a new combination of a new pre-determined key and of new pre-determined hash-values. If the pre-determined key is replaced by a new one, the target hash-values of the target attributes are changed as well, in order to be able to carry out a meaningful comparison between the candidate hash-value, created in real-time by using the new key, and the target hash-values created in advance by using the same new key.

The approach taken in the further embodiment creates yet another difficulty to the attacker, as the life-time of the relevance of the currently used target hash-values ends when the pre-determined vent occurs. In this manner, the time that is available to the attacker to determine the target attributes during the life-time of their target hash-values, is further reduced.

The pre-determined event is, for example, the receipt of the new pre-determined key from outside the communication network, in order to replace the key used in the preceding time period.

The new target hash-values may have been stored at the network equipment prior to provisioning the new key. The provisioning of the new pre-determined key from outside the network just before the list of new target hash-values is going to be used, has several advantages. First, the list of new target hash-values can be provided from outside the communication network and stored at the network equipment without any time constraints imposed by the LI processes being carried out. Second, the new target hash-values stored at the network equipment cannot be used to discover the associated target attributes, even not by applying brute computing force, if the new pre-determined key is not present on the communication network. By means of provisioning the new pre-determined key only shortly before it is going to be applied in operational use, the time available to the attacker to discover the target attributes during the operational life-time of the target hash-values on the network is reduced further.

As another example, the pre-determined event is the receipt of a selection signal. The specific pre-determined key is selected from a plurality of pre-determined keys, stored in advance at the network equipment, under control of the selection signal. Likewise, the pre-determined target hash-value is selected from a set of multiple pre-determined target hash-values, stored in advance at the network equipment, under control of the selection signal. The selection signal may have been provisioned from outside the communication network, or may have been generated within the communication network, e.g., by means of a random generator.

The invention also relates to control software for configuring equipment on a communication network to carry out a method of conditionally subjecting a candidate communication, conducted via the communication network, to a pre-determined processing. The control software may be provided as stored on a computer-readable medium, e.g., a solid-state memory, an optical disk, a magnetic disc, etc., or may be provided via the Internet as a downloadable file to be stored at a memory of the network equipment. The control software comprises first instructions for determining a candidate attribute of the candidate communication, during a procedure for setting up the candidate communication on the communication network. The candidate attribute is representative of at least one of: a first identity of a source requesting the setting-up of the candidate communication, and a second identity of a destination of the candidate communication as requested by the source. The control software comprises second instructions for producing a candidate hash-value. The second instructions comprise third instructions for using the candidate attribute as an input to a hash-function. The control further comprises fourth instructions for determining if the candidate hash-value corresponds to a specific pre-determined target hash-value; and fifth instructions for subjecting the candidate communication to the pre-determined processing only if the candidate hash-value corresponds to the specific pre-determined target hash-value.

In an embodiment of the control software, the second instructions comprise sixth instructions for using a specific pre-determined key as a further input to the hash-function.

A further embodiment of the control software comprises seventh instructions for detecting an occurrence of a pre-determined event; and eighth instructions for determining the specific pre-determined key and the specific target value in response to detecting the occurrence of the predetermined event

In a further embodiment of the control software, the pre-determined event comprises receiving the pre-determined specific key.

### BRIEF DESCRIPTION OF THE DRAWING

The invention is explained in further detail, by way of example and with reference to the accompanying drawing, wherein:
Fig.1 is a block diagram of a system configured for LI; and
Figs. 2 and 3 are process diagrams of processes according to the invention.

Throughout the Figures, similar or corresponding features are indicated by same reference numerals.

### DETAILED EMBODIMENTS

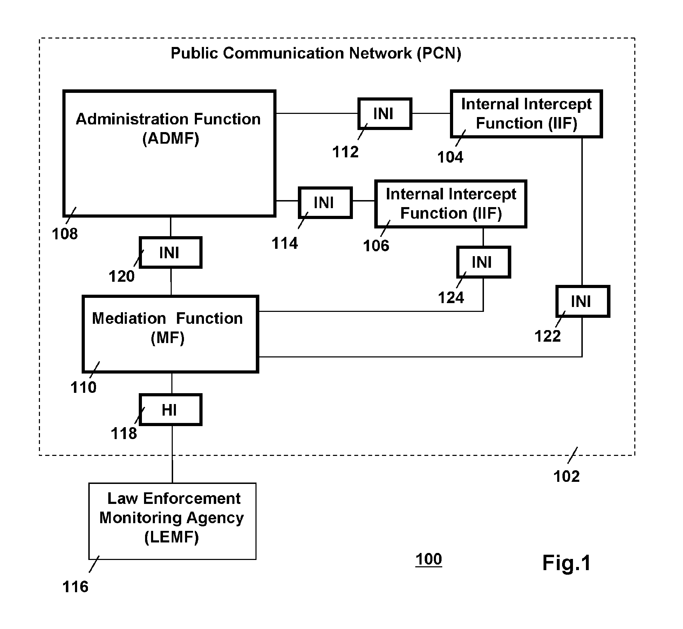

Fig.1 is a block diagram of an LI system 100 configured for carrying out LI of a targeted communication conducted between terminals (not shown) via a communication network 102. The LI system 100 of Fig. 1 is known in the art. The communication network 102 comprises a multitude of interlinked nodes (not shown) to provide communication channels between the terminals connected to the communication network 102. The communication network 102 comprises, for example, a public telephone network (such as a landline telephone network, a mobile telecommunication network), a data network such as part of the Internet, used for e.g., email communication, SMS communication, voice-over-IP (VoIP) telephony, file downloads, or an access network that gives access to the Internet, etc. A particular terminal comprises, e.g., a landline telephone or a mobile telephone, a VoIP telephone, a personal computer with an interface to a data network that serves as the communication network 102, etc.

The communication network 102 of the LI system 100 has been provided with dedicated elements so as to be able to carry out LI. Below, an inventory of the dedicated elements will be given first, after which their operations will be discussed. It is remarked here that the dedicated elements are known in the art.

In order to be able to carry out LI of targeted communications, the communication network 102 is provided with the following dedicated elements: a first Internal Intercept Function (IIF) 104, a second Internal Intercept Function 106, an Administration Function (ADMF) 108, a Mediation Function (MF) 110, a first Internal Network Interface (INI) 112, a second Internal Network Interface 114, a Handover Interface (HI) 118, a third Internal Network Interface 120, a fourth Internal Network Interface 122, and a fifth Internal Network Interface 124. The communication network 102 may comprise one or more further Internal Intercept Functions, but these have not been represented in the diagram in order to not obscure the drawing. The dedicated elements are under control of the operator of the communication network 102. The Administration Function 108 communicates with the first Internal Intercept Function 104 via the first Internal Network Interface 112, and with the second Internal Intercept Function 106 via the second Internal Network Interface 114. The Mediation Function 110 communicates with the first Internal Intercept Function 104 via the fourth Internal Network Interface 122, with the second Internal Intercept Function 106 via the fifth Internal Network Interface 124, and with the Administration Function 108 via the third Internal Network Interface 120. The Mediation Function 110 communicates with a Law Enforcement Monitoring Facility 116 via the Handover Interface 118.

Each individual one of the first Internal Intercept Function 104 and the second Internal Intercept Function 106 is accommodated at individual network elements of the communication network 102. Each individual one of the first Internal Intercept Function 104 and the second Internal Intercept Function 106 is configured to collect information about a specific targeted communication such as, e.g., information about the identities of the terminals involved in the specific targeted information, the duration of the specific targeted communication, the time of the day of the specific targeted communication, information representative of a semantic content (i.e., the payload) of the specific targeted communication, etc. The information to be collected about the specific targeted communication has been specified in a specific LI request from the Law Enforcement Monitoring Facility 116 and sent to the Mediation Function 110 via the Handover Interface 118.

Consider a first scenario, wherein the communication network 102 comprises a mobile telecommunication network. Then, a particular one of the first Internal Intercept Function 104 and the second Internal Intercept Function 106 is installed at a particular one of a Mobile Switching Center server (MSC-server), a Serving GPRS Support Node (SGSN) and a Gateway GPRS Support Node (GGSN). The acronym "GPRS" stands for General Packet Radio Service, which is a packet-oriented mobile data service on the Global System for Mobile communication (GSM). An MSC-server is a core network element of GSM, which controls the elements of the GSM core network. An SGSN is responsible for the delivery of data packets from and to the mobile stations within the geographical service area of the SGSN. A GGSN is responsible for interfacing between the GPRS network and external packet switched networks, such as the Internet.

The Law Enforcement Monitoring Facility 116 submits a specific LI request to the Mediation Function 110 installed on the mobile telecommunication network. The specific LI request specifies a specific target attribute that enables to identify the specific targeted communication on the mobile telecommunication network. The specific target attribute is used to configure the first Internal Intercept Function 104 and/or the second Internal Intercept Function 106 for intercepting the specific targeted communication when the specific targeted communication is being initiated. The specific target attribute may include, e.g., a Caller ID of a landline telephone, one or more particular Mobile Subscriber Integrated Services Digital Network Numbers (MSISDNs) and/or one or more particular International Mobile Subscriber Identities (IMSIs) and/or one or more particular International Mobile Equipment Identities (IMEIs).The MSISDN is the telephone number of the subscriber identity module (SIM) card of the mobile telephone and uniquely identifies a subscription in a mobile telephone network. The communication network processes the MSISDN to couple the MSISDN to the IMSI of the SIM-card. The IMSI is a unique identification associated with the user of the mobile telephone. At setting up a connection via the mobile telecommunication network, the IMSI is sent by the mobile telephone to the mobile telecommunication network. The IMSI is also used to acquire information of the mobile telephone as stored in the Home Location Register (HLR) or as locally copied in the Visitor Location Register (VLR). The IMEI is a number that identifies the mobile telephone. The IMEI number is used by the mobile telecommunication network to identify whether the associated mobile telephone is a valid device. For example, the IMEI can be used in order to prevent a stolen telephone from accessing the mobile telecommunication network.

Consider a second scenario, wherein the communication network 102 comprises a data network. A particular one of the first Internal Intercept Function 104 and the second Internal Intercept Function 106 is installed at a particular one of, e.g., a router, a gateway, an access point, etc. The Law Enforcement Monitoring Facility 116 submits a specific LI request to the Mediation Function 110 installed on the data network. The specific LI request specifies a specific target attribute that enables to identify the specific targeted communication on the data network. The specific target attribute is used to configure the first Internal Intercept Function 104 and the second Internal Intercept Function 106 for intercepting the specific targeted communication when the specific targeted communication is being initiated. The specific target attribute may include, for example, an email address of a terminal involved in the specific targeted communication, a network address of a server or a URL of a web site, a particular port number, etc.

The Administration Function 108 manages the LI requests received from the Law Enforcement Monitoring Facility 116, and organizes the tasks in the communication network 102 in order to intercept the respective targeted communications as specified in the respective LI requests. To this end, the Administration Function 108 configures the relevant ones of the first Internal Intercept Function 104 and/or the second Internal Intercept Function 106 on the basis of the respective target attributes specified in the respective LI requests. Once configured, the first Internal Intercept Function 104 and, the second Internal Intercept Function 106 are ready to extract the relevant information from the targeted communications when they occur. The Administration Function 108 is only accessible to authorized personnel of the network operator or of the service provider.

The Mediation Function 110 communicates with the Law Enforcement Monitoring Facility 116 via the Handover Interface (HI) 118 for receipt of the LI requests, and with the Administration Function 108 via the third Internal Network Interface 120. The Mediation Function 110 passes on the LI requests to the Administration Function 108 so as to enable the Administration Function 108 to configure the first Internal Intercept Function 104 and/or the second Internal Intercept Function 106 as discussed above. The Mediation Function 110 receives the extracted relevant information from the first Internal Intercept Function 104 via the fourth Internal Network Interface 122, and/or from the second Internal Intercept Function 106 via the fifth Internal Network Interface 124. The Mediation Function 110 collects the requested information about the targeted communications as received from the first Internal Intercept Function 104 and/or the second Internal Intercept Function 106, formats this information and forwards this formatted information to the Law Enforcement Monitoring Facility 116 via the Handover Interface 118.

As discussed above, the first Internal Intercept Function 104 and the second Internal Intercept Function 106 are accommodated at equipment of the communication network 102. In operational use of the LI system 100, the first Internal Intercept Function 104 and/or the second Internal Intercept Function 106 have been configured to intercept a specific targeted communication under control of the specific target attributes as specified in the specific LI requests. The specific target attribute is therefore present at the equipment of the communication network 102, e.g., stored in a memory at the relevant network entity. The target attribute, however, represents sensitive information from the point of view of, e.g., privacy and crime investigation. Therefore, the target attribute needs to be secured against unauthorized access, e.g., against being discovered by a hacker.

The target attribute could be encrypted with an encryption key, and the encrypted target attribute could be stored at the relevant elements. There is a one-to-one relationship between the encrypted target attribute as stored and the unencrypted target attribute as received in the LI request. However, in order to determine whether a currently initiated communication on the communication network 102 is a targeted communication according to a pending LI request, the target attribute needs to be matched against a candidate attribute that identifies the candidate communication on the communication network 102. One could encrypt the candidate attribute with the same encryption key upon extraction of the candidate attribute, and match the encrypted candidate attribute against the encrypted target attribute. This implies that the encryption key be stored so as to be readily available to the first Internal Intercept Function 104 and/or the second Internal Intercept Function 106. The encryption key needs to be readily available to ensure that the process of intercepting a targeted communication can start before the actual communication channel has been set up. This typically requires that the encryption key itself (and the encryption algorithm) be stored at the respective equipment of the communication network 102 that accommodates the respective one of the first Internal Intercept Function 104 and the second Internal Intercept Function 106, if configured to intercept the targeted communication. However, security is compromised in case the encryption key and the encryption algorithm are stored together with the encrypted target attribute at the same site.

In order to ensure security of the target attributes stored on the communication network 102, the inventor uses a different approach. In the invention, the Law Enforcement Monitoring Facility 116 subjects each respective target attribute to a specific hash-function to produce a respective target hash-value. The Law Enforcement Monitoring Facility 116 provides to the Mediation Function 110 the target hash-values thus produced and the hash-function used. The target hash-values and the hash-function are then stored locally at the relevant equipment of the communication network 102 to configure the relevant one of the first Internal Intercept Function 104 and the second Internal Intercept Function 106 for intercepting the targeted communications. The candidate attribute, representative of the candidate communication on the communication network 102 is extracted at the relevant one of the first Internal Intercept Function 104 and the second Internal Intercept Function 106. The candidate attribute is then subjected to the hash-function as stored to produce a candidate hash-value. The candidate hash-value is matched against the stored target hash-values in order to find a match. If there is a match, the candidate communication is a targeted communication and is therefore subjected to the LI processing (e.g., logging of call details on a telephone network, recording of the call on the telephone network, logging of the time of the day of the call; logging of email addresses involved in the targeted email communication, logging of web sites accessed, etc).

Accordingly, the invention is based on the comparison, preferably in real-time, of the locally stored target hash-value and the candidate hash-value calculated in real-time for the candidate attribute, e.g., the MSISDN and/or the IMSI and/or the IMEI of a mobile telephone communication, etc. Assume, for example, that the first Internal Intercept Function 104 has been configured for intercepting a plurality of targeted communications. A specific one of the plurality of targeted communications is associated with a specific target attribute. Each specific target attribute is represented on the communication network 102 by a specific hash-value, stored locally at the particular equipment of the communication network 102 that accommodates the first Internal Intercept Function 104. If the particular equipment gets involved in a candidate communication, the first Internal Intercept Function 104 determines the candidate attribute of the candidate communication and calculates the candidate hash-value of the candidate attribute, using the hash-function stored at the particular equipment. The first Internal Intercept Function 104 then tries to match the candidate hash-value against the stored target hash-values. If there is match between the candidate hash-value and a particular one of the stored target hash-values, the candidate communication is considered a targeted communication. The first Internal Intercept Function 104 then starts the Lawful Intercept of the candidate communication according to the instructions in the particular LI request associated with the particular target hash-value.

On a telephone network, the process of calculating the candidate hash-value and comparing the candidate hash-value with each of the stored target hash-values, is preferably executed within, say, 200 msec from the start of the set-up of the communication in order to avoid unacceptable delays in the set-up, or to avoid that the Lawful Interception is started too late.

Assume that an unauthorized person has obtained access to the target hash-values and the hash-function as stored on the communication network 102. In case the length of the target attribute (i.e., the number of bits in the string representing the target attribute) is relatively short, the unauthorized person could calculate the hash-values for all possible target attributes and thereupon scan the stored target hash-values for a match within a relatively short time. This problem can be solved by increasing the length of the string of bits by adding extra bits to each target attribute before hashing the lengthened string in order to create the target hash-value. These extra bits are referred to in this description as the "key".

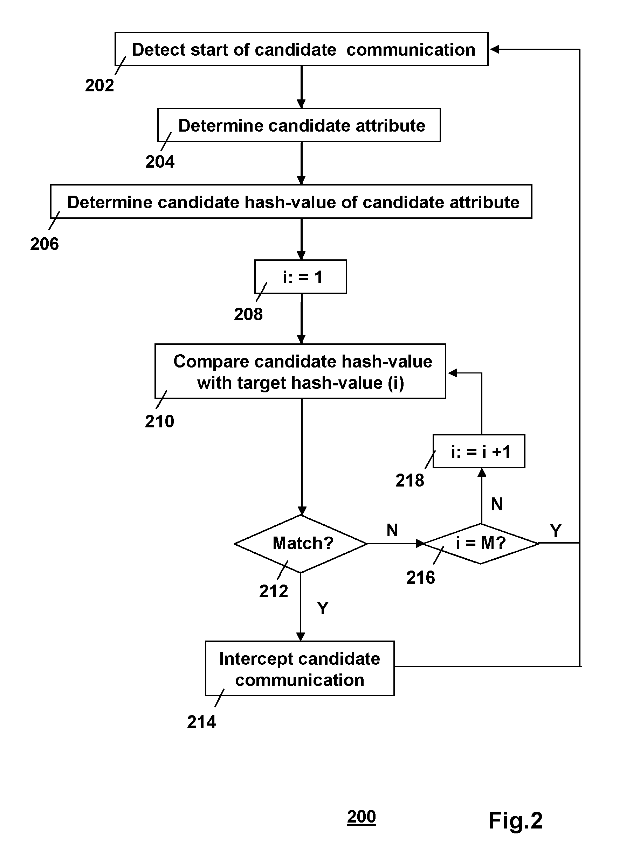

Fig.2 is a process diagram of a first process 200 according to the invention. The first process 200 illustrates a first method of conditionally subjecting a communication, conducted via the communication network 102, to a pre-determined processing according to an LI request at, e.g., the first Internal Intercept Function 104.

Before the first process 200 can be carried out, the first Internal Intercept Function 104 needs to be configured for operational use. The configuring comprises storing a list of target hash-values in a local memory at the first Internal Intercept Function 104, or updating the list of target hash-values already stored in the local memory. The updating is implemented, e.g., by means of adding one or more new target hash-values as instructed by one or more LI requests and/or by deleting one or more stored target hash-values from the list as instructed by one or more other LI requests. Per individual one of the target hash-values on the list prepared for operational use, the Internal Intercept Function 104 also stores individual instructions regarding what information to extract during the interception of the targeted communication associated with the individual target has-value.

If the prepared list has a total number of "M" target hash-values, a respective one of the target hash-values is identified by its respective location "i" on the list, wherein "i" is an integer from the set of integers from the number "one" to the number "M", the set including the number "one" and the number "M". Accordingly, the location "i" is a running variable, with an integer value that runs from the number "one" to the number "M".

After the first Internal Intercept Function 104 has been configured, the first process 200 starts in a first step 202.

In the first step 202, the first Internal Intercept Function 104 detects the start of a candidate communication.

In a second step 204, the first Internal Intercept Function 104 determines the candidate attribute of the candidate communication, whose start was detected in the first step 202. Examples of such attributes have been discussed above. For example, in the LI of a mobile telephone communication, the attribute may be one or more of the particular Mobile Subscriber Integrated Services Digital Network Numbers (MSISDNs) and/or one or more particular International Mobile Subscriber Identities (IMSIs) and/or one or more particular International Mobile Equipment Identities (IMEIs) that characterize the communication with respect to the LI.

In a third step 206, the first Internal Intercept Function 104 determines the candidate hash-value of the candidate attribute by means of applying the same hash-function that was applied to the target attributes in order to generate the target hash-values of the list stored at the first Internal Intercept Function 104. Optionally, and as discussed above, each respective one of the target hash-values on the list may have been created by first adding a key to the respective bit string that represents the respective target attribute to lengthen the respective bit string, and subjecting the thus lengthened respective bit string to the hashing operation of the hash-function. If the target hash-values were created using this key, the same key is used to lengthen the bit string of the candidate attribute before subjecting the thus lengthened bit string to the same hashing operation.

In a fourth step 208, the value of the running variable "i" is set to "one".

In a fifth step 210, the candidate hash-value is compared with the target hash-value having location "i" on the list.

In a sixth step 212, it is determined whether or not the candidate hash-value matches the target hash-value of location "i". If the candidate hash-value matches the target hash-value of location "i", the candidate communication is a targeted communication, and the first process 200 proceeds to a seventh step 214.

In the sevenths step 214, the candidate communication is considered a targeted communication and is intercepted to collect the information requested in the LI request associated with the target hash-value at location "i". After this, the first process 200 ends for the candidate communication and returns to the first step 202 to process a new candidate communication whose start has been detected next.

If it is determined in the sixth step 212 that the candidate hash-value does not match the target hash-value of location "i", the first process 200 proceeds to an eighth step 216.

In the eighth step 216, it is determined whether the value of the running variable "i" has reached the last location on the list. The running variable "i" has reached the last location on the list if the running variable "i" has assumed the value "M". If the running variable "i" has not reached the last location on the list, the first process 200 proceeds to a ninth step 218.

In the ninth step 218, the value of the running variable "i" is incremented by unity to indicate the target hash-value at the next location on the list, and the first process 200 returns to the fifth step 210.

If it is determined in the eighth step 216 that the running variable "i" has assumed the value "M", the first process 200 ends for the candidate communication. As a result, the candidate communication is not considered one of the targeted communications, and the first process 200 ends for this candidate communication and returns to the first step 202 to process a new candidate communication whose start has been detected next.

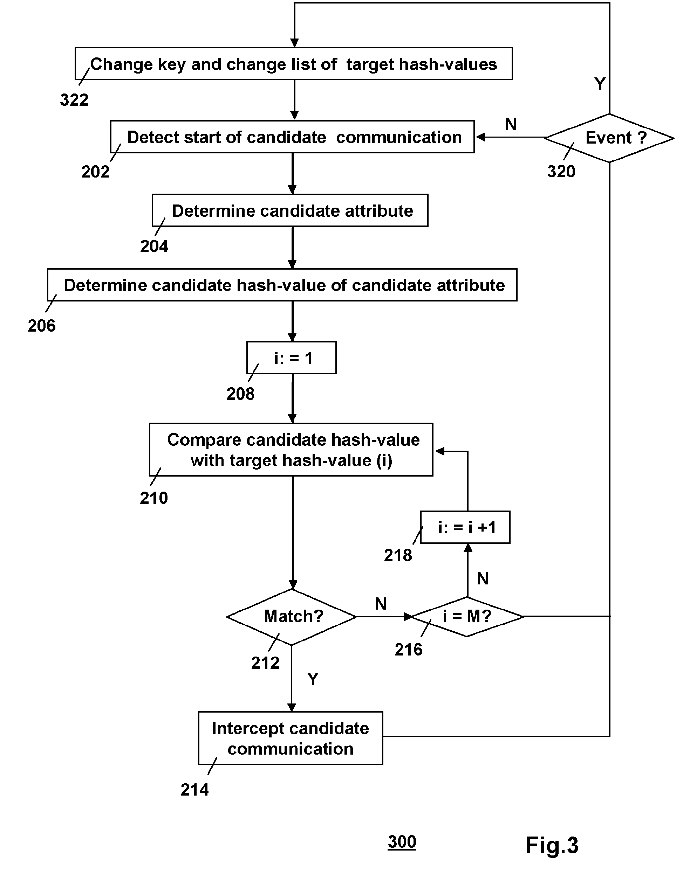

Fig.3 is a diagram of a second process 300 according to the invention to further increase security of the target attributes, whose target hash-values are stored at the equipment of the communication network 102. The second process 300 includes the steps of the first process 200 of the diagram of Fig.2.

Assume that the first Internal Intercept Function 104 has been configured for operational use. Then, in the first step 202, the first Internal Intercept Function 104 detects the start of a candidate communication.

In the second step 204, the first Internal Intercept Function 104 determines the candidate attribute of the candidate communication, whose start was detected in the first step 202.

In the third step 206, the first Internal Intercept Function 104 determines the candidate hash-value of the candidate attribute by means of applying the same hash-function that was applied to the target attributes in order to generate the target hash-values of the list stored at the first Internal Intercept Function 104. Each respective one of the target hash-values on the list has been created by first adding a pre-determined key to the respective bit string that represents the respective target attribute to lengthen the respective bit string, and subjecting the thus lengthened respective bit string to the hashing operation of the hash-function. The same pre-determined key is used in the third step 206 to lengthen the bit string of the candidate attribute before subjecting the thus lengthened bit string to the same hashing operation.

In the fourth step 208, the value of the running variable "i" is set to "one".

In the fifth step 210, the candidate hash-value is compared with the target hash-value having location "i" on the list.

In the sixth step 212, it is determined whether or not the candidate hash-value matches the target hash-value of location "i". If the candidate hash-value matches the target hash-value of location "i", the candidate communication is a targeted communication, and the third process 300 proceeds to the seventh step 214.

In the sevenths step 214, the candidate communication is considered a targeted communication and is intercepted to collect the information requested in the LI request associated with the target hash-value at location "i". After the seventh step 214, the second process 300 proceeds with a tenth step 320.

In the tenth step 320, it is determined if a pre-determined event has occurred. For example, the pre-determined event includes the receipt of a trigger signal from beyond the communication network 102. As another example, the pre-determined event is the receipt of a new pre-determined key.

If it is determined in the tenth step 320 that the pre-determined event has not occurred, the second process 300 returns to the first step 202 to process a new candidate communication, whose start has been detected next.

If it is determined in the tenth step 320 that the pre-determined event has occurred, the second process proceeds with an eleventh step 322.

In the eleventh step 322, the pre-determined key that was used in the previous execution of the third step 206, is replaced by another pre-determined key. Likewise, the list of target hash-values, as used in the previous execution of the fifth step 210, is replaced by another list of other target hash-values. The other target hash-values were constructed from the target attributes using the other pre-determined key.

After the eleventh step 322, the second process 300 returns to the first step 202 to process a new candidate communication, whose start has been detected next.

If it is determined in the sixth step 212 that the candidate hash-value does not match the target hash-value of location "i", the second process 300 proceeds to the eighth step 216.

In the eighth step 216, it is determined whether the value of the running variable "i" has reached the last location on the list. The running variable "i" has reached the last location on the list if the running variable "i" has assumed the value "M". If the running variable "i" has not reached the last location on the list, the third process 300 proceeds to the ninth step 218.

In the ninth step 218, the value of the running variable "i" is incremented by unity to indicate the target hash-value at the next location on the list, and the second process 300 returns to the fifth step 210.

If it is determined in the eighth step 216 that the running variable "i" has assumed the value "M", the second process 300 ends for the candidate communication. As a result, the candidate communication is not considered one of the targeted communications, and the second process 300 ends for this candidate communication. The second process 300 proceeds then to the tenth step 320.

## Claims

1. A method (200; 300) of conditionally subjecting a candidate communication, conducted via a communication network (102), to a pre-determined processing, the method comprising:
determining (204) a candidate attribute of the candidate communication, during a procedure for setting up the candidate communication on the communication network, wherein:
the candidate attribute is representative of at least one of: a first identity of a source requesting the setting-up of the candidate communication, and a second identity of a destination of the candidate communication as requested by the source;
producing (206) a candidate hash-value, wherein:
the producing comprises using the candidate attribute as an input to a hash-function;
determining (212) if the candidate hash-value corresponds to a specific pre-determined target hash-value; and
subjecting (214) the candidate communication to the pre-determined processing only if the candidate hash-value corresponds to the specific pre-determined target hash-value.

2. The method of claim 1, wherein the producing of the candidate hash-value comprises using a specific pre-determined key as a further input to the hash-function.

3. The method of claim 2, comprising determining (322) the specific pre-determined key and the specific target value in response to detecting (320) an occurrence of a predetermined event

4. The method of claim 3, wherein the pre-determined event comprises receiving the pre-determined specific key.

5. Control software for configuring equipment on a communication network (102) to carry out a method (200; 300) of conditionally subjecting a candidate communication, conducted via the communication network, to a pre-determined processing, the control software comprising:
first instructions for determining (204) a candidate attribute of the candidate communication, during a procedure for setting up the candidate communication on the communication network, wherein:
the candidate attribute is representative of at least one of: a first identity of a source requesting the setting-up of the candidate communication, and a second identity of a destination of the candidate communication as requested by the source;
second instructions for producing (206) a candidate hash-value, wherein:
the second instructions comprise third instructions for using the candidate attribute as an input to a hash-function;
fourth instructions for determining (212) if the candidate hash-value corresponds to a specific pre-determined target hash-value; and
fifth instructions for subjecting (214) the candidate communication to the pre-determined processing only if the candidate hash-value corresponds to the specific pre-determined target hash-value.

6. The control software of claim 5, wherein the second instructions comprise sixth instructions for using a specific pre-determined key as a further input to the hash-function.

7. The control software of claim 6, comprising:
seventh instructions for detecting (320) an occurrence of a pre-determined event; and
eighth instructions for determining (322) the specific pre-determined key and the specific target value in response to detecting the occurrence of the predetermined event

8. The control software of claim 7, wherein the pre-determined event comprises receiving the pre-determined specific key.
